# FASCICULE DE BREVET EUROPEEN

(11) **EP 1 719 945 B1**
(45) Date de publication et mention de la délivrance du brevet: **24.03.2010**
(21) Numéro de dépôt: 06290703.5
(22) Date de dépôt: 03.05.2006
(51) Int. Cl.: F16L 41/08

(54) **Connectique de raccordement d'un tube d'un flexible à haute pression pour un circuit de climatisation par exemple**
Anschlussvorrichtung für Hochdrückleitungen
High pressure coupling

(30) Priorité: 03.05.2005 FR 0504473
(43) Date de publication de la demande: 08.11.2006
(73) Titulaire: HUTCHINSON, 75008 Paris (FR)
(72) Inventeur: Garcia, Anthony, 45700 Villemandeur (FR); Houssin, Alexandre, 45200 Montargis (FR)
(74) Mandataire: Bolinches, Michel Jean-Marie

(56) Documents cités:
- DE-A1- 3 925 293
- US-A1- 2004 036 277
- US-B1- 6 386 593

## Description

L'invention concerne une connectique de raccordement d'un tube d'un flexible à haute pression pour un circuit de climatisation par exemple.

A l'heure actuelle, la tendance est de privilégier l'utilisation du gaz carbonique comme fluide frigorigène dans les systèmes de climatisation des véhicules automobiles, à la place des CFC et en particulier du R 134a. En effet, ces gaz ne sont pas compatibles avec les contraintes de l'environnement qui sont liées à la dégradation de la couche d'ozone et à l'effet de serre.

Cependant, l'utilisation du gaz carbonique nécessite des pressions et températures de fonctionnement nettement plus élevées, à savoir de l'ordre de 100 bars et 100°C en haute pression, et de 45 bars en basse pression, sachant que l'on peut atteindre des pressions extrêmes de l'ordre de 150 bars et des températures simultanées de 150°C à l'extérieur et de 180°C à l'intérieur du flexible. En outre, le gaz carbonique peut constituer un solvant pour certains produits constituant la couche interne du flexible.

Ces conditions de fonctionnement ont conduit les équipementiers à concevoir des flexibles à haute pression de type métallique comprenant au moins un tube rigide en acier inoxydable ou en aluminium par exemple et un tuyau souple constitué par un onduleux métallique recouvert d'une gaine en acier inoxydable par exemple.

Par ailleurs, le fluide frigorigène entré dans un circuit de climatisation correspond à une masse comprise entre 300g et 500g dans le cas du gaz carbonique, et cette masse ne peut varier que de 20g au maximum pour assurer des conditions de fonctionnement optimales. Autrement dit, les connectiques de raccordement d'un flexible à haute pression doivent satisfaire à des conditions d'étanchéité quasiment parfaites.

D'une manière générale, une connectique de raccordement pour un tube métallique d'un flexible à haute pression est constituée par un embout métallique qui peut être fabriqué d'une seule pièce avec le tube. Cet embout de raccordement comprend une bride de fixation qui se prolonge par un élément tubulaire formant la partie mâle de la connectique de raccordement, et cette bride est percée d'un premier orifice pour le passage de fluide frigorigène et d'un second orifice pour assurer sa fixation sur un élément femelle de la connectique de raccordement.

Le système d'étanchéité associé à cette connectique de raccordement est généralement double, à savoir une première étanchéité constitué par un joint torique monté dans une gorge de l'élément mâle de la connectique de raccordement, et une pièce d'étanchéité faciale souple plaquée sur une face de la bride de fixation et sur laquelle vient prendre appui une face de l'élément femelle de la connectique de raccordement. La pièce d'étanchéité faciale est une pièce de faible épaisseur, de l'ordre de 0,5mm maximum, réalisée en aluminium par exemple, et qui présente un contour globalement similaire à celui de la bride de fixation, avec un premier orifice correspondant au diamètre extérieur de la partie mâle de la connectique de raccordement et un second orifice pour le passage de l'élément de fixation entre les parties mâle et femelle de la connectique de raccordement. Cette pièce d'étanchéité faciale peut être enrobée d'une couche d'un caoutchouc nitrile par exemple, et est par exemple du type de celle décrite aux figures 6 à 9 du document US-6,386,593.

La Demanderesse a effectué des essais comparatifs pour tester les fuites dans différents systèmes d'étanchéité établis à partir de celui décrit plus haut dans des conditions normales de fonctionnement à une pression de l'ordre de 90 bars et une température voisine de 120°C :
- un système d'étanchéité comprenant seulement un ou deux joints toriques dans la partie mâle de la connectique, entraîne des fuites de l'ordre de 25g/an, ce qui n'est pas techniquement acceptable ;
- un système d'étanchéité comprenant seulement une pièce d'étanchéité faciale revêtu ou non d'une couche de caoutchouc nitrile, entraîne également des fuites, ce qui n'est pas techniquement acceptable ;
- un système d'étanchéité comprenant un joint torique dans la partie mâle de la connectique et une pièce d'étanchéité faciale du type de celle décrite dans le document précité, entraîne également des fuites, ce qui n'est pas techniquement acceptable ; et
- un système d'étanchéité comprenant un ou deux joints toriques dans la partie mâle de la connectique et une pièce d'étanchéité faciale non enrobée de caoutchouc nitrile, entraîne également des fuites, ce qui n'est pas techniquement acceptable.

Un but de l'invention est de perfectionner un tel système d'étanchéité pour obtenir des conditions de fonctionnement satisfaisantes, sachant que pour un circuit de climatisation les fuites acceptables doivent être inférieures à 2g/an.

A cet effet, l'invention propose une connectique de raccordement d'un tube d'un flexible à haute pression d'un circuit de climatisation par exemple, cette connectique étant constituée par une partie mâle fabriquée ou non d'une seule pièce avec le tube et comprenant une bride de fixation qui est prolongée par un élément tubulaire rigide formant un élément mâle de la connectique de raccordement, par une partie femelle formée dans un organe de réception avec un logement ménagé dans une face plane de l'organe de réception et apte à recevoir l'élément tubulaire de la partie mâle, et par un système d'étanchéité, qui est caractérisée en ce que le système d'étanchéité comprend deux lignes d'étanchéité sous la forme de deux joints toriques logés dans deux gorges périphériques de l'élément tubulaire de la partie mâle de la connectique de raccordement, et une troisième ligne d'étanchéité formée par une pièce d'étanchéité faciale en un métal mou et enrobée d'un matériau élastomère, qui est plaquée contre la bride de fixation et sur laquelle vient en appui sur une face de la partie femelle de réception.

Des essais effectués sur une connectique de raccordement comprenant un tel système d'étanchéité ont été très satisfaisants, les fuites se limitant à 1,5g/an par une pression de l'ordre de 90 bars et une température voisine de 120°C, c'est-à-dire dans les conditions normales de fonctionnement d'un circuit de climatisation dont le fluide frigorigène est du CO₂.

Selon une autre caractéristique de l'invention, la pièce d'étanchéité faciale est réalisée en aluminium et enrobée d'un matériau élastomère tel qu'un terpolymère fluoré par exemple.

D'une manière générale, les pièces mâle et femelle de la connectique de raccordement sont fixées l'une à l'autre par un moyen de serrage, tel qu'une vis par exemple, qui est axialement décalé par rapport à l'axe de la connectique de raccordement.

Aussi, pour assurer une étanchéité parfaite au niveau de la pièce d'étanchéité faciale, on prévoit avantageusement des moyens de centrage de cette pièce pour obtenir une étanchéité tout autour de son orifice qui est traversé par l'élément tubulaire de la partie mâle de la connectique de raccordement.

D'autres avantages, caractéristiques et détails de l'invention ressortiront du complément de description qui va suivre en référence à des dessins annexés, donnés uniquement à titre d'exemple et dans lesquels :
- la figure 1 est une figure en perspective éclatée d'une connectique de raccordement selon l'invention ;
- la figure 2 est une vue en coupe agrandie suivant la flèche II-II de la figure 1 ; et
- la figure 3 est une vue en coupe axiale de la connectique de raccordement de la figure 1 une fois assemblée.

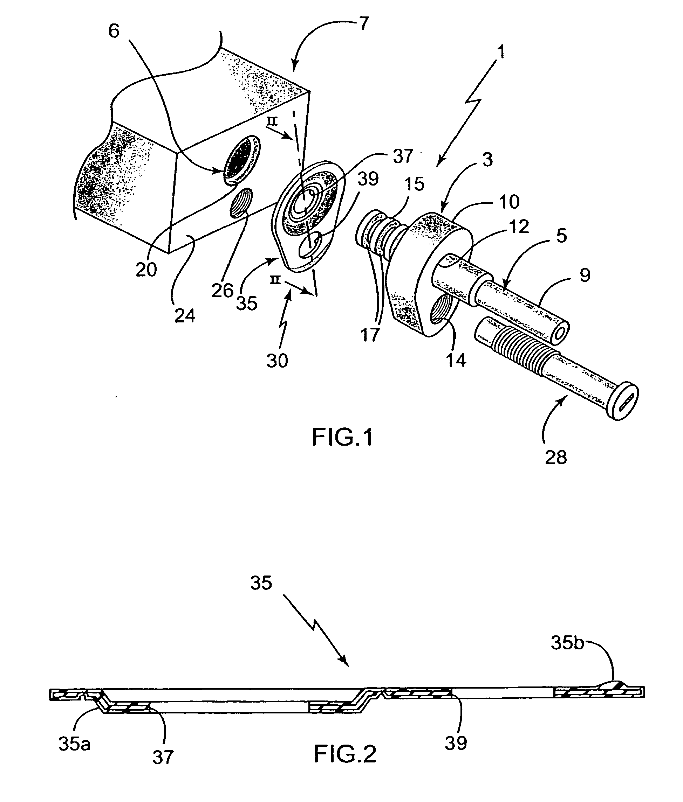

La figure 1 montre une connectique de raccordement 1 suivant un exemple de réalisation de l'invention et est constituée d'une partie mâle 3 située à une extrémité d'un flexible à haute pression 5 pour un circuit de climatisation à gaz carbonique par exemple, et d'une partie femelle 6 située dans un organe de réception 7. La représentation du flexible 5 a été limitée à une portion d'un tube rigide 9 qui peut être en aluminium ou en acier inoxydable par exemple.

La partie mâle 3 de la connectique de raccordement 1 comprend notamment une bride de fixation 10 qui est percée d'un premier orifice 12 axialement aligné avec le tube 5 pour assurer le passage du fluide frigorigène, et d'un second orifice de fixation 14. La bride 10 se prolonge dans l'axe du tube 5 par un élément tubulaire rigide 15 formant un élément mâle et qui présente deux gorges périphériques 17. Dans l'exemple illustré à la figure 1, la bride de fixation 10, l'élément tubulaire 15 et le tube 9 sont fabriqués d'une seule pièce.

La partie femelle 6 de la connectique de raccordement 1 est constituée par un logement 20 percé dans une face plane 24 de l'organe de réception 7 et qui est apte à recevoir l'élément tubulaire 15 formant l'élément mâle, et par un orifice 26 également percé dans la face 24 et qui va se trouver en regard de l'orifice 14 de la bride 10 pour permettre le passage d'un moyen de fixation 28 tel qu'une vis de serrage par exemple pour fixer l'une à l'autre les parties mâle 3 et femelle 6.

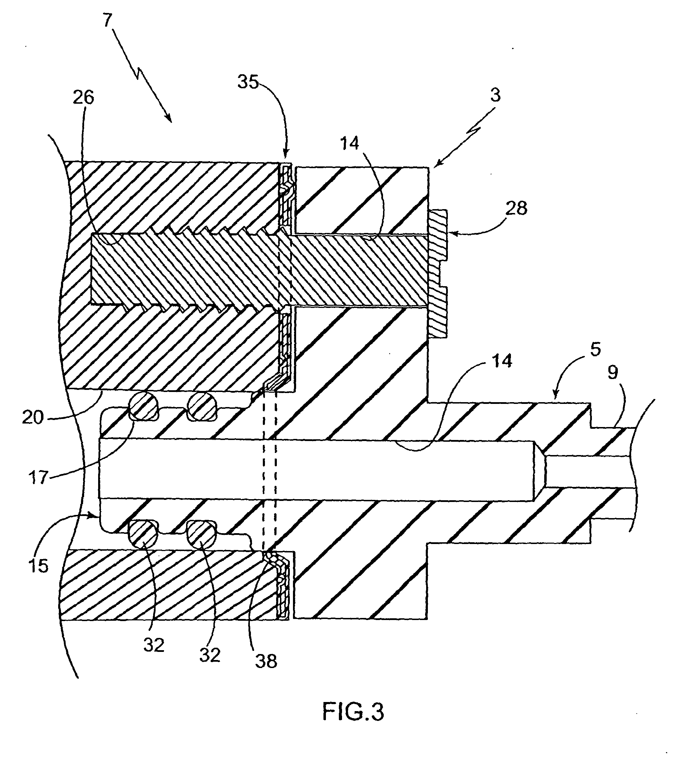

La connectique de raccordement 1 est associée à un système d'étanchéité 30 qui présente trois lignes d'étanchéité. Les deux premières lignes d'étanchéité sont constituées par deux joints toriques 32 en un matériau déformable par exemple en un matériau élastomère qui sont respectivement montés dans les deux gorges périphériques 17 de la partie mâle 3 (figure 3). Les joints toriques 32 peuvent avoir une section circulaire, carrée, trapézoïdale, ..., c'est-à-dire que la forme de la section des tores peut être quelconque. La troisième ligne d'étanchéité est constituée par une pièce 35 de faible épaisseur et réalisée en un métal mou, qui est enrobée d'un matériau élastomère tel qu'un terpolymère fluoré (FKM ou FPM). Cette pièce 35 est apte à assurer une étanchéité faciale entre la bride 10 et la face 24 en regard de l'organe de réception 7.

La pièce d'étanchéité faciale 35 présente un profil globalement similaire à celui de la bride 10 avec un premier orifice 37 ayant un diamètre à peine supérieur au diamètre externe de l'élément tubulaire 15, et un second orifice 39 pour le passage du moyen de fixation 28. Par ailleurs, il est souhaitable que le système d'étanchéité 30 assure une très bonne étanchéité, ce qui impose un parfait alignement entre les différentes pièces constituant la connectique de raccordement 1 avant leur assemblage illustré à la figure 3. Tout d'abord, la présence des deux joints d'étanchéité toriques 32 permet d'assurer un centrage de l'élément tubulaire 15 de la partie mâle 3 dans le logement 20 de la partie femelle 6. Par ailleurs, il faut également que la pièce d'étanchéité 35 soit parfaitement centrée sur l'élément tubulaire 15 de la partie mâle 3 pour qu'une étanchéité soit assurée sur toute la périphérie de son orifice 37 qui est traversé par l'élément tubulaire 15.

A cet effet, comme cela est illustré à la figure 2, la pièce d'étanchéité 35 n'est pas plane, mais présente des parties en relief pour assurer son centrage dès l'instant où le moyen de fixation 28 est axialement décalé par rapport à l'axe de la connectique de raccordement 1.

Dans ces conditions, les efforts qui résultent de l'actionnement du moyen de serrage 28 peuvent occasionner un mauvais alignement de la pièce d'étanchéité 35 et, par conséquent, une étanchéité défectueuse autour de l'orifice 37 de la pièce 35. Le centrage de la pièce d'étanchéité 35 est assuré par au moins un premier bossage 35a prévu par exemple tout autour de l'orifice 37, et un second bossage 35b qui est situé à proximité du trou de fixation 39 de la pièce d'étanchéité 35, mais ne s'étendant pas nécessairement tout autour de ce trou 39. Le bossage 35a s'étend en saillie à la face de la pièce d'étanchéité 35 qui est en regard du logement 20 de l'organe de réception 7 et est apte à venir au contact de l'entrée du logement 20 qui présente un alésage 38. Le bossage 35b est en saillie à l'autre face de la pièce d'étanchéité 35 et est apte à venir au contact de la face en regard de la bride de fixation 10.

## Revendications

1. Connectique de raccordement d'un tube d'un flexible à haute pression pour un circuit de climatisation par exemple, cette connectique de raccordement (1) étant constituée d'une partie mâle (3) fabriquée ou non d'une seule pièce avec le tube (9) et comprenant une bride de fixation (10) qui est prolongée par un élément tubulaire rigide (15) formant un élément mâle, d'une partie femelle (6) formée dans un organe de réception (7) avec un logement (20) ménagé dans une face plane (24) de l'organe de réception (7) et apte à recevoir l'élément tubulaire (15), et d'un système d'étanchéité entre les parties mâle (3) et femelle (6), **caractérisée en ce que** le système d'étanchéité comprend deux lignes d'étanchéité sous la forme de deux joints toriques (32) logés dans deux gorges périphériques (17) de la partie mâle de la connectique de raccordement, et une troisième ligne d'étanchéité formée par une pièce d'étanchéité faciale (35) en un métal mou et enrobée d'un matériau élastomère, qui est plaquée contre la bride de fixation (10) et sur laquelle vient en appui la face (24) de l'organe de réception.

2. Connectique de raccordement selon la revendication 1, dans laquelle la pièce d'étanchéité faciale (35) est réalisée en aluminium et est enrobée d'un matériau élastomère tel qu'un terpolymère fluoré.

3. Connectique de raccordement selon la revendication 1 ou 2, dans laquelle sont prévus des moyens de centrage (35a, 35b) de la pièce d'étanchéité (35) dans la connectique de raccordement.

4. Connectique de raccordement selon la revendication 3, dans laquelle les moyens de centrage comprennent un premier bossage (35a) ménagé autour d'un premier orifice (37) de la pièce d'étanchéité (35) qui est traversé par l'élément tubulaire (15) de la partie mâle (3), ce bossage (35a) étant apte à venir au contact d'un alésage (38) ménagé autour d'un logement (20) de l'organe de réception (7) qui reçoit l'élément tubulaire (15) de la partie mâle (3).

5. Connectique de raccordement selon la revendication 4, dans laquelle les moyens de centrage comprennent un second bossage (35b) prévu au voisinage d'un second orifice (39) percé dans la pièce d'étanchéité (35) pour le passage d'un moyen de fixation (28) pour raccorder l'une à l'autre les parties mâle (3) et femelle (7) de la connectique de raccordement.

6. Connectique de raccordement selon la revendication 5, dans laquelle les deux bossages (35a, 35b) sont respectivement situés sur les deux faces de la pièce d'étanchéité (35).

7. Connectique de raccordement selon l'une des revendications précédentes, dans laquelle les deux joints toriques (32) logés dans les deux gorges périphériques (17) de la partie mâle de la connectique de raccordement, ont une forme quelconque en section.

## Claims

1. Connector for attaching a tube of a high pressure air hose for an air-conditioning circuit, for example, this connector (1) being made up of a male part (3) which is or is not made in one piece with the tube (9) and comprising a fixing flange (10) which is extended by a rigid tubular element (15) forming a male element, of a female part (6) formed in a receiving member (7) with a recess (20) provided in a planar surface (24) of the receiving member (7) and adapted to receive the tubular element (15), and of a sealing system between the male (3) and female (6) parts, **characterised in that** the sealing system comprises two sealing lines in the form of two toroidal joints (32) housed in two peripheral grooves (17) in the male part of the connector, and a third sealing line formed by a facial sealing member (35) made of a soft metal and coated with an elastomeric material, which is pressed against the fixing flange (10) and on which the face (24) of the receiving member abuts.

2. Connector according to claim 1, wherein the facial sealing member (35) is made of aluminium and is coated with an elastomeric material such as a fluorinated terpolymer.

3. Connector according to claim 1 or 2, wherein centring means (35a, 35b) are provided for centring the sealing member (35) in the connector.

4. Connector according to claim 3, wherein the centring means comprise a first boss (35a) provided around a first orifice (37) in the sealing member (35) through which passes the tubular element (15) of the male part (3), this boss (35a) being adapted to come into contact with a bore (38) provided around a recess (20) in the receiving member (7) which receives the tubular element (15) of the male part (3).

5. Connector according to claim 4, wherein the centring means comprise a second boss (35b) provided in the vicinity of a second orifice (39) drilled in the sealing member (35) to accommodate a fixing member (28) for connecting the male (3) and female (7) parts of the connector to one another.

6. Connector according to claim 5, wherein the two bosses (35a, 35b) are located, respectively, on the two sides of the sealing member (35).

7. Connector according to one of the preceding claims, wherein the two toroidal joints (32) accommodated in the two peripheral grooves (17) in the male part of the connector are of any desired cross-sectional shape.

## Patentansprüche

1. Anschlussvorrichtung eines Rohres eines Hochdruckschlauches beispielsweise für einen Klimatisierungskreis, wobei die Anschlussvorrichtung (1) durch ein vorstehendes Teil (3), das mit dem Rohr (9) einstückig hergestellt ist oder nicht und das einen Befestigungsflansch (10) aufweist, der durch ein ein vorstehendes Element bildendes, starres Rohrelement (15) verlängert ist, ein aufnehmendes Teil (6), das in einer Aufnahmeeinrichtung (7) mit einer Lagerung (20) gebildet ist, die in einer ebenen Fläche (24) der Aufnahmeeinrichtung (7) untergebracht ist und in der Lage ist, das Rohrelement (15) aufzunehmen, und ein Abdichtsystem zwischen dem vorstehenden Teil (3) und dem aufnehmenden Teil (6) gebildet ist, **dadurch gekennzeichnet, dass** das Abdichtsystem zwei Dichtlinien in Form von zwei Runddichtringen (32), die in zwei Umfangsausnehmungen (17) des vorstehenden Teils der Anschlussvorrichtung untergebracht sind, und eine dritte Dichtlinie aufweist, die durch ein Flächendichtstück (35) aus Weichmetall gebildet ist, das von einem Elastomermaterial ummantelt ist, das gegen den Befestigungsflansch (10) gepresst wird und gegen das die Fläche (24) der Aufnahmeeinrichtung drückt.

2. Anschlussvorrichtung nach Anspruch 1, wobei das Flächendichtstück (35) aus Aluminium gefertigt ist und von einem Elastomermaterial, wie fluoriertem Terpolymer, ummantelt ist.

3. Anschlussvorrichtung nach Anspruch 1 oder 2, wobei eine Zentriereinrichtung (35a, 35b) des Dichtstücks (35) in der Anschlussvorrichtung vorgesehen ist.

4. Anschlussvorrichtung nach Anspruch 3, wobei die Zentriereinrichtung einen ersten Vorsprung (35a) aufweist, der um eine erste Öffnung (37) des Dichtstücks (35) angeordnet ist, die von dem Rohrelement (15) des vorstehenden Teils (3) durchquert wird, wobei dieser Vorsprung (35a) in der Lage ist, mit einer Bohrung (38) in Berührung zu gelangen, die um eine Lagerung (20) der Aufnahmeeinrichtung (7) vorgesehen ist, die das Rohrelement (15) des vorstehenden Teils (3) aufnimmt.

5. Anschlussvorrichtung nach Anspruch 4, wobei die Zentriereinrichtung einen zweiten Vorsprung (35b) aufweist, der in der Nähe einer zweiten Öffnung (39) vorgesehen ist, die in das Dichtstück (35) eingebracht ist, damit eine Befestigungseinrichtung (28) hindurchgeht, um den vorstehenden Teil (3) und den aufnehmenden Teil (7) der Anschlussvorrichtung miteinander zu verbinden.

6. Anschlussvorrichtung nach Anspruch 5, wobei die zwei Vorsprünge (35a, 35b) an den zwei Flächen des Dichtstücks (35) jeweils angeordnet sind.

7. Anschlussvorrichtung nach einem der vorhergehenden Ansprüche, wobei die zwei Runddichtringe (32), die in den zwei Umfangsausnehmungen (17) des vorstehenden Teils der Anschlussvorrichtung untergebracht sind, im Querschnitt eine beliebige Form aufweisen.
